# EUROPÄISCHE PATENTSCHRIFT

(11) **EP 2 768 653 B1**
(45) Veröffentlichungstag und Bekanntmachung des Hinweises auf die Patenterteilung: **20.07.2016**
(21) Anmeldenummer: 12783167.5
(22) Anmeldetag: 21.10.2012
(51) Int. Cl.: B29C 47/22, B29C 47/92, B29C 49/04, B29C 47/08

(54) **EXTRUSIONSKOPF ZUR HERSTELLUNG VON HOHLKÖRPERN**
EXTRUSION HEAD FOR PRODUCING HOLLOW ARTICLES
TÊTE D'EXTRUSION POUR PRODUIRE DES CORPS CREUX

(30) Priorität: 21.10.2011 DE 102011116680
(43) Veröffentlichungstag der Anmeldung: 27.08.2014
(73) Patentinhaber: Gross, Heinz, 64380 Roßdorf (DE)
(72) Erfinder: Gross, Heinz, 64380 Roßdorf (DE)
(74) Vertreter: Katscher Habermann Patentanwälte
(86) Internationale Anmeldenummer: PCT/EP2012/070834
(87) Internationale Veröffentlichungsnummer: WO 2013/057304

(56) Entgegenhaltungen:
- DE-A1- 2 941 260
- DE-A1- 3 026 822
- DE-U- 7 005 561
- JP-A- 60 056 515
- JP-A- 61 175 008
- US-A- 3 611 494
- US-A- 3 981 672

## Beschreibung

Die Erfindung betrifft einen Extrusionskopf für Kunststoffextruder, insbesondere zur Herstellung von Vorformlingen für geblasene Behälter, aufweisend zwei Kopfteile, wobei ein erstes Kopfteil ein Dorn und ein zweites Kopfteil eine Düse ist, und wobei die beiden Kopfteile in axialer Richtung über einen Austrittsbereich hinweg relativ zueinander verlagerbar sind, wodurch die Geometrie eines Austrittsspalts eines Fließkanals, der sich zwischen dem Dorn und der Düse befindet, und damit auch die Wanddicke eines aus dem Kopf austretenden schlauchförmigen Kunststoffstrangs veränderbar ist.

Bei der Extrusion von Kunststoffen werden Extrusionsköpfe zum Austragen einer fließfähigen Kunststoffschmelze verwendet, um am Ende des Kopfes die Kunststoffschmelze mit einer genau definierten Geometrie und einer gewünschten Wanddicke bzw. Wanddickenverteilung austreten zu lassen. Wenn aus der Kunststoffschmelze Hohlprofile, wie zum Beispiel Schläuche, Rohre oder Profile hergestellt werden sollen, benötigen die Extrusionsköpfe einen Dorn und eine Düse, die den Dorn umschließt. Die Fließkanalgeometrie wird im Austrittsbereich vorgegeben durch die Geometrie von Dorn und Düse. Die Formgebung und die Wanddicke der extrudierten Kunststoffschmelze wird durch die Formgebung eines Austrittsspalts vorgegeben. Der Austrittsspalt wird seinerseits durch die Position vorgegeben, die ein Endbereich der Düse relativ zum Dorn besitzt. Um beispielsweise bei einem Schlauch Ungleichmäßigkeiten in den örtlichen Austrittsgeschwindigkeiten der Masse, die über dem Umfang vorhanden sind, zu beseitigen, oder aber um gerade bewusst Ungleichmäßigkeiten zu erzeugen, muss unter sonst konstanten Förderbedingungen die Geometrie des Fließkanalspalts bzw. die Position des Dorns relativ zu der Düse verändert werden.

Beim Extrusionsblasformen ist es beispielsweise vorteilhaft, wenn man die Wanddicke des Schlauchs unter Beibehaltung einer konstanten Austrittsgeschwindigkeit über dem Umfang des Schlauchs verändern kann, um so den unterschiedlichen Verstreckverhältnissen des herzustellenden Formkörpers gerecht werden zu können. Ziel ist es dabei, kostengünstiger komplizierte Formkörper mit einer besseren Dickenverteilung herstellen zu können, als es mit dem Stand der Technik möglich ist.

### Stand der Technik

Beim Extrusionsblasformen werden Extrusionsköpfe fest an einen Extruder, aus dem eine Schmelze in den Schlauchkopf eingespeist wird, angeflanscht, um einen Schmelzschlauch auszutragen. Derartige Extrusionsköpfe besitzen am Ende zwei Kopfteile, einen Dorn und eine Düse, die einen den Dorn umgebenden ringförmigen Fließkanal bilden. Diese beiden Kopfteile weisen bei Extrusionsköpfen, die für das Blasformen benutzt werden, in ihrem Austrittsbereich eine konisch verlaufende Formgebung auf, womit auch der Fließkanal in dem Bereich an dem Austrittsspalt konisch ist. Durch eine Relativverschiebung des einen Kopfteils relativ zu dem anderen Kopfteil kann der Austrittsspalt größer oder kleiner vorgegeben werden. Auf diese Weise kann die Wanddicke des Schlauchs in Abzugsrichtung während des Austragens der Schmelze verändert werden (siehe Thielen, M.; Hartwig, K.; Gust, P.: Blasformen von Kunststoff-Hohlkörpern, Carl Hanser Verlag München Wien, ISBN-10: 3-446-22671-0, Seiten 45 und 46), um auf diese Weise trotz unterschiedlicher Verstreckverhältnisse des Formteils in Austragsrichtung eine gleichmäßige Wanddicke im Formteil erreichen zu können.

Alternativ ist es möglich, mit demselben Werkzeug Schläuche herzustellen, die eine größere oder kleinere über dem Umfang gemittelte Wanddicke besitzen.

Dabei gibt es beim Blasformen grundsätzlich zwei Verfahrensvarianten, wobei entweder der Dorn bei einer fest mit dem Extruder verbundenen Düse, oder aber die Düse bei einem fest mit dem Extruder verbundenen Dorn axial in Ausstoßrichtung verschoben werden. Vereinfachend werden deshalb der Dorn und die Düse jeweils als Kopfteile bezeichnet, wenn es in dem betreffenden Zusammenhang nicht darauf ankommt, ob das mit Kopfteil bezeichnete Element der Dorn oder die Düse ist.

Zusätzlich kann man auch noch die Wanddicke des Schlauchs in Umfangsrichtung mit Hilfe von Düsen verändern, die längs ihres Umfangs flexibel deformierbar sind, wie es beispielsweise in DE 2654001 in DE 19931870 beschrieben ist. Dies erfordert einen teuren flexibel deformierbaren Düsenbereich und entsprechende Aktuatoren, mit denen dieser flexible Düsenbereich dann während des Schlauchaustrags verändert wird.

Eine andere Lösung besteht darin, für eine radiale Wanddickenbeeinflussung längs eines Umfangs einen im Dorn integrierten zusätzlichen Schieber (EP 1 685 943 B1) zu verwenden. Aber auch in diesem Fall ist ein komplizierter Dorn mit einem Schieber erforderlich, wobei der Schieber natürlich wieder einen Aktuator benötigt, der über eine zusätzliche spezielle Software angesteuert werden muss. Auf diese Weise kann man dann variable Dickenunterschiede längs eines Umfangs des Schlauchs realisieren. Jedoch erzeugt der Schieber eine störende Unstetigkeitsstelle im Fließkanal und die elastisch verformbaren Düsen sind ungeeignet, um lokal begrenzt große Unterschiede in der Wanddicke des Schlauchs zu erzeugen.

Grundsätzlich werden bei diesen Verfahren immer Düsen eingesetzt, die am Ende in ihrem Austrittsbereich konisch sind, um zusätzlich zu einer längs des Umfangs lokal bewirkten Veränderung der Wanddicke auch eine längs des Umfangs gleichmäßige Änderung der Wanddicke in Abzugsrichtung durch Veränderung des konisch verlaufenden Austrittsspalts beeinflussen zu können. Über dem Umfang flexibel deformierbare Düsen werden auch eingesetzt, um relativ einfache Formteile, wie Kanister oder auch runde Fässer, herzustellen. Derartige dynamische radiale Wanddickensteuerungssysteme, wie sie in DE 2654001, in DE 19931870 bzw. in EP 1 685 943 B1 vorgeschlagen werden, um die Dickenverteilung im Endprodukt zu verbessern, sind nun wie bereits angedeutet technisch sehr aufwendig und dementsprechend auch sehr teuer. Die Druckschriften JP 60 56515 A und JP 61 175008 A offenbaren weitere Extruderköpfe mit zwei relativ zueinander verlagerbaren Kopfteilen, wobei eines der Kopfteile mehrere Kopfabschnitte mit voneinander abweichenden Querschnittsflächen aufweist.

Ziel der Erfindung ist es daher, die Wanddicke von Schläuchen auch über dem Umfang verändern zu können, ohne dabei die bekannten teuren und technisch aufwendigen dynamischen radialen Wanddickensteuerungssysteme, die zusätzliche Aktuatoren und die spezielle Steuerungsprogramme für die Aktuatoren erfordern, zu benötigen und möglichst nicht die Nachteile, die mit diesen Verfahren verbunden sind, in Kauf nehmen zu müssen.

Die Aufgabe, sowohl eine dynamische axiale als insbesondere auch gleichzeitig eine dynamische radiale Wanddickensteuerung unter Vermeidung der beschriebenen Nachteile des Stands der Technik zu realisieren, wird erfindungsgemäß dadurch gelöst, dass jedes Kopfteil in einem Austrittsbereich A des Kopfes, mindestens einen Bereich mit einer gleichbleibenden Querschnittsfläche aufweist und dass mindestens ein Kopfteil mindestens zwei Kopfabschnitte B und C aufweist, die jeweils eine gleichbleibende Querschnittsfläche besitzen, wobei die beiden Kopfabschnitte axial beabstandet sind und eine voneinander abweichende Querschnittsfläche aufweisen, und wobei die beiden Kopfteile in axialer Richtung relativ zueinander verlagerbar sind, wodurch die Geometrie eines Fließkanals, der sich zwischen dem Dorn und der Düse befindet, und damit auch die Wanddicke eines aus dem Kopf austretenden Schlauchs veränderbar ist. Die Querschnittsfläche eines Kopfabschnitts, bzw. eines sich in axialer Richtung längs eines Kopfteils erstreckenden Abschnitts wird maßgeblich durch die Umfangskontur und durch den Flächeninhalt definiert. Abweichungen der Querschnittsflächen einzelner Kopfabschnitte voneinander betreffen eine Änderung des Flächeninhalts, eine Veränderung der Umfangskontur oder eine gleichzeitige Änderung sowohl des Flächeninhalts als auch der Umfangskontur. Um diskontinuierliche Übergänge zwischen einzelnen Kopfabschnitten zu vermeiden ist vorgesehen, dass einzelne speziell profilierte Kopfabschnitte durch Übergangskopfabschnitte verbunden werden, wobei die Oberflächen zwischen den profilierten Kopfabschnitten und den Übergangskopfabschnitten kontinuierlich, bzw. tangential ineinander übergehen.

Idealerweise sind mindestens bei einem Kopfteil der Flächeninhalt und eine Umfangskontur der Querschnittsfläche am Anfang und am Ende des Austrittsbereichs A annähernd gleich. Allerdings können sich die Querschnittsflächen auf Grund von speziellen Profilierungen auch geringfügig unterscheiden, womit sich auch die Flächeninhalte und die Umfangskontur der Querschnittsflächen geringfügig unterscheiden können.

Der Austrittsbereich A beginnt an der Stelle, an der der feststehende Kopfteil von einem konischen Verlauf der Zuführung der Kunststoffschmelze in den in erster Näherung zylindrischen Verlauf übergeht, und endet an einem Austrittsende des feststehenden Kopfteils, das gleichzeitig eine Begrenzung des Austrittsspalts darstellt.

Im Austrittsbereich A befinden sich Abschnitte, in denen die Oberflächen der beiden Kopfteile in axialer Richtung vorrangig parallel verlaufen. Ebenfalls in axialer Richtung gesehen befindet sich vor dem Austrittsbereich A der Fließkanalbereich H für die Zuführung der Kunststoffschmelze, der einen konischen Verlauf besitzt, und in dem der Fließkanalspalt zwischen den beiden Kopfteilen um ein Vielfaches größer ist, als der im Austrittsbereich A.

Gemäß einer Ausgestaltung des Erfindungsgedankens bleibt der Spalt zwischen den Ringspalt vorgebenden Oberflächen des feststehenden und des beweglichen Kopfteils über dem Umfang des Kopfes und über die axiale Länge eines Kopfabschnitts konstant, solange der bewegliche Teil um nicht mehr als die axiale Länge des jeweiligen Kopfabschnitts verschoben wird. Ausgenommen davon sind wiederum in einen Kopfabschnitt eingebrachte begrenzte Profilierungen zur Beeinflussung des Fließwiderstands an speziellen Stellen, die sich über dem Umfang des Kopfabschnitts befinden. Das heißt die beiden Kopfteile sind näherungsweise zylindrisch oder die einzelnen Kopfabschnitte der beiden Kopfteile verlaufen vorwiegend parallel zueinander.

Prinzipiell basiert die Erfindung auf der Idee, entgegen allen Lehrbüchern und entgegen der Forderung aller Blasformexperten, mindestens ein Kopfteil im Bereich des Austrittsspaltes nicht konisch, sondern zylindrisch zu gestalten. Damit muss man erst einmal auf die Möglichkeit, die Dicke des Schlauchs einfach durch eine axiale Veränderung der relativen Lage zwischen dem konischen Dorn und der konischen Düse beeinflussen zu können, verzichten.

Zur Veränderung der Wanddicke des Schlauchs, der aus dem Kopf ausgetragen werden soll, ist es nun erforderlich, dass das bewegliche Kopfteil mindestens zwei Kopfabschnitte besitzt, die eine voneinander abweichende Querschnittsfläche besitzen, mit denen durch axiales Verschieben des Dorns die aktive Fließkanalgeometrie an dem Austrittsspalt verändert werden kann. Um an bestimmten Stellen über der Länge des Schlauchs nun die mittlere Wanddicke vergrößern oder verkleiner zu können, ist es erforderlich, dass der Kopf im Austrittsbereich A mindestens einen Kopfabschnitt B besitzt, dessen mittlerer Abstand der Oberfläche von der Mittellinie M des Kopfes größer ist und mindestens einen Kopfabschnitt G besitzt, dessen mittlerer Abstand von der Mittellinie M kleiner ist als der eines dritten Kopfabschnitts C. Die Mittelline eines Kopfabschnittes ergibt sich, wenn man die Mittelpunkte der punktsymmetrischen Querschnittsgrundgeometrien am Anfang und am Ende eines Kopfabschnittes miteinander verbindet, wobei lokale Änderungen der Querschnittsgrundgeometrie, wie zum Beispiel lokale Profilierungen eines Kopfabschnittes längs einer Umfangslinie dieses Kopfabschnitts unberücksichtigt bleiben. Mögliche Grundgeometrien sind alle Querschnittsgeometrien, die punktsymmetrisch sind, wie zum Beispiel kreisförmig, oval, quadratisch, rechteckig oder andere Vielecke.

Damit beim Verschieben des Dorns keine Unstetigkeit in der mittleren Austrittsgeschwindigkeit auftritt, ist es vorgesehen, dass die Querschnittsfläche der Öffnung F der Führung des beweglichen Kopfteils und die Querschnittsfläche des Endbereichs des beweglichen Kopfteils identisch sind, oder aber dass sie sich zumindest um nicht mehr als 10 % voneinander unterscheiden.

Um bei dem erfindungsgemäßen Verfahren die lokale Austrittsgeschwindigkeit über dem Umfang in der gewünschten Weise beeinflussen zu können, ist es von Vorteil, wenn das bewegliche Kopfteil im Austrittsbereich A wenigstens zwei Abschnitte B und G aufweist, deren Mittellinien Mg oder M eine unterschiedliche Lage besitzen, oder wenn das bewegliche Kopfteil mindestens einen Bereich G besitzt, dessen Mittellinie Mg wenigstens einen Abstand von 0,1 mm von der Mittellinie M des Kopfteils besitzt. Auf diese Weise können unterschiedliche Fließwiderstände, die durch entsprechende Geometrievariationen in anderen Kopfabschnitten hervorgerufen werden, wieder kompensiert werden, so dass schließlich der Schlauch trotz einer über dem Schlauchumfang variierenden Dicke eine möglichst gleichmäßige Austrittsgeschwindigkeit über dem Umfang besitzt.

Um an bestimmten Stellen des Schlauchs große Dickenunterschiede erzeugen zu können, ohne benachbarte Bereiche dadurch zu sehr negativ zu beeinflussen, ist es vorteilhaft, wenn das bewegliche Kopfteil im Austrittsbereich A über wenigstens einen Bereich G verfügt, in dem mindestens eine Profilierung existiert, die eine von der kreisförmigen Grundgeometrie abweichende, unregelmäßige Umfangsgeometrie besitzt. Dies ist besonders dann notwendig, wenn das Formteil einen Bereich besitzen soll, dessen Verstreckgrad sich in starkem Maß von den benachbarten Bereichen abhebt.

Speziell zur Kompensation von Unterschieden in der Austrittsgeschwindigkeit des Schlauchs über dem Umfang ist es vorteilhaft, wenn der bewegliche Kopfteil mindestens einen Kopfabschnitt D besitzt, dessen Mittellinie Md nicht die gleiche Lage besitzt, wie die Mittellinie M und der erst durch eine Verschiebung des beweglichen Kopfteils den Fließkanalbereich H verlässt und in den Austrittsbereich A des Kopfes gelangt. Solange dieser Kopfabschnitt D sich im Fließkanalbereich H befindet, beeinflusst er den Fließwiderstand nur sehr geringfügig, da im Fließkanalbereich H der Fließkanalspalt sehr groß ist, so dass die relative Spaltänderung durch die Geometrieänderung des Kopfabschnitts D unbedeutend ist.

Bei dem erfindungsgemäßen Verfahren muss das bewegliche Kopfteil viel weiter innerhalb des Austrittsbereichs A verfahren werden, als dies normalerweise üblich ist. Damit tritt das Problem auf, dass der Schlauch an der Oberfläche des über den Austrittsspalt herausragenden beweglichen Kopfteils hängen bleiben kann. Um dieses Problem zu verringern, ist gemäß einer Ausgestaltung des Erfindungsgedankens vorgesehen, dass das Ende des beweglichen Kopfteils aus Teflon besteht. Dies ist besonders dann empfehlenswert, wenn das bewegliche Kopfteil am Ende des Schlauchaustrags einen radial vorspringenden Abschnitt aufweist, um durch eine geeignete Verlagerung relativ zu dem feststehenden Kopfteil den Fließkanalspalt verschließen zu können, um zum Beispiel einen Vorratsspeicher neu mit Schmelze befüllen zu können. In diesem Fall kann das Ende des beweglichen Kopfteils konisch ausgeführt werden, um den Fließkanalspalt schließen zu können.

Einen weiteren Freiheitsgrad zur Veränderung der Spaltgeometrie des Fließkanals gewinnt man, wenn man die Düse zweigeteilt ausführt und wenn man zwischen den beiden Düsenteilen ein elastisches Kippgelenk integriert. Dann kann die Fließkanalgeometrie zusätzlich verändert werden, ohne dass das bewegliche Kopfteil verschoben werden muss. Diese Möglichkeit kann wiederum vorteilhaft genutzt werden, um die Austrittsgeschwindigkeit über dem Umfang des Kopfes im gewünschten Sinn beeinflussen zu können.

Der erfindungsgemäße Extrusionskopf wird erheblich montagefreundlicher, wenn die beiden Kopfteile mit Hilfe eines Bajonettverschlusses miteinander verbunden werden. Damit kann e das Kopfteil mit einer Drehbewegung an dem anderen Kopfteil an- und auch wieder abgeflanscht werden.

Natürlich kann ein Kopfteil auch am Ende des Austrittsbereichs A des Fließkanals, bzw. am Austrittsspalt eine ovale, eine rechteckige oder eine andere von der kreisförmigen Form abweichende punktsymmetrische Grundgeometrie besitzen. Auch in diesem Fall müssen die Fließkanaloberflächen der beiden Kopfteile natürlich vorrangig Fließkanalbereiche aufweisen, deren Oberflächen parallel zueinander angeordnet sind, um die gewünschte vorteilhafte Wanddickenprofilierung realisieren zu können.

Bei dem erfindungsgemäßen Extrusionskopf lassen sich das verschiebbare Kopfteil aus einzelnen axial versetzten Abschnitten oder Scheiben mit einer spezifisch auf das jeweils herzustellende Formteil optimierten dreidimensionalen Geometrie herstellen. Man kann durch mehrere geeignet ausgestaltete Kopfabschnitte nun sowohl die Spaltweite insgesamt, als auch die Spaltweite über dem Umfang verändern. Somit lässt sich durch Verschieben des Dorns sowohl die Dicke des Schlauchs in Abzugsrichtung als auch längs einer Umfangslinie in radialer Richtung entsprechend den Erfordernissen eines herzustellenden Formteils verändern, indem man einfach während des Austrags des Schlauchs durch das gewohnte Verschieben des Dorns unterschiedlich profilierte Dornbereiche den Austrittsspalt begrenzen und für die Formgebung des ausgetragenen Kunststoffstrangs wirksam werden lässt. Wenn man nun den Dorn verschiebt, dann fährt das Ende des Dorns mit dem untersten Dornbereich aus der Düse heraus und verliert dabei seinen Einfluss auf die Dickenverteilung des austretenden Schlauchs. Gleichzeitig fährt aber in den oberen zylindrischen Austrittsbereich der Düse ein neuer Dornabschnitt herein, dessen Geometrie dann den Fließwiderstand und damit natürlich auch das Fließverhalten der fließfähigen Masse verändert.

Mit dem erfindungsgemäßen Extrusionskopf können somit auch Formteile mit einer lokal angepassten Dickenverteilung hergestellt werden, obwohl sie Bereiche aufweisen, in denen sich der Verstreckgrad lokal sehr stark ändert. Wenn auch noch der Fließkanalspalt eines erfindungsgemäßen Extrusionskopfes zusätzlich durch eine lokale Deformation der Düse oder aber durch Kippen eines Düsenteils verändert wird, kann man erhebliche Dickenunterschiede in der Umfangs- sowie Abzugsrichtung des Schlauchs erreichen, wie sie mit den bekannten Blasformverfahren nicht erreicht werden können. Somit können nun auch Hohlköper, bei denen man auf Grund ihrer komplizierten Geometrie mit den bekannten Blasformverfahren keine gute Dickenverteilung erreichen kann, mit einer guten Dickenverteilung hergestellt werden.

### Ausführungsbeispiele:

Die Erfindung wird an Hand der schematischen Zeichnung näher erläutert:
Fig. 1 zeigt einen Ausschnitt eines erfindungsgemäßen Kopfes in einer Schnittdarstellung,

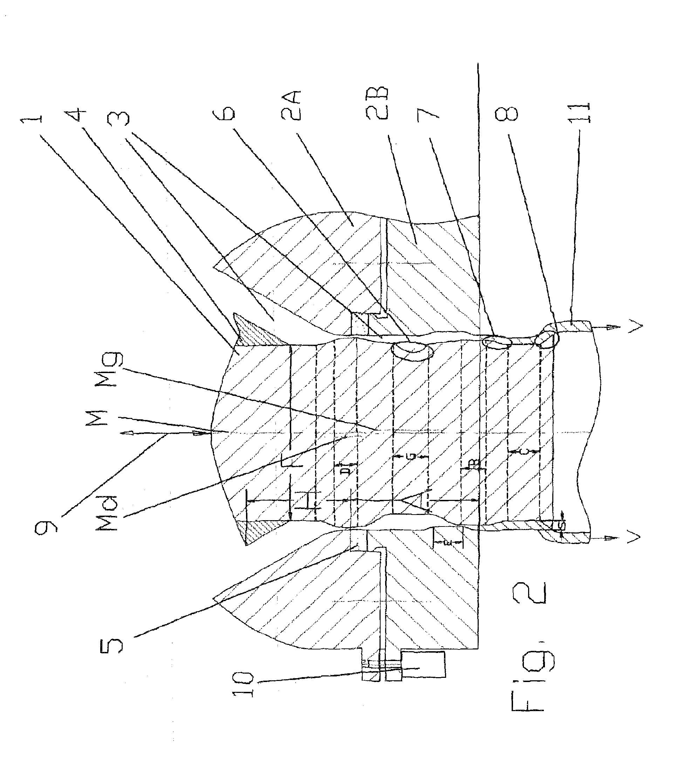

Fig. 2 zeigt den Ausschnitt aus Fig. 1, wobei der bewegliche Dorn 1 gegenüber Fig. 2 verschoben ist,
Fig. 3 zeigt beispielhaft eine Querschnittsfläche eines Oberflächenbereichs zur Herstellung eines rechteckigen Kanisters, und
Fig. 4 zeigt beispielhaft eine Querschnittsfläche eines Oberflächenbereichs zur Herstellung einer runden Flasche, die an einer Stelle eine Ausgussöffnung besitzt

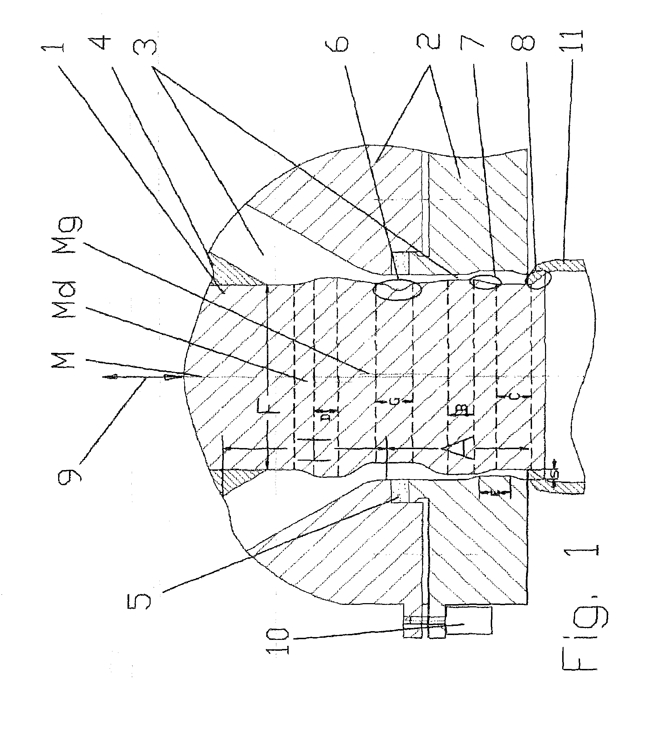

Wie in Fig. 1 dargestellt besitzt der Extrusionskopf ein erstes Kopfteil, nämlich einen Dorn 1, und ein zweites Kopfteil, nämlich eine Düse 2, die einen Fließkanal 3 begrenzen. Die Kopfgeometrie bzw. die Formgebung des zwischen der Düse und dem Dorn befindlichen ringförmigen Fließkanals 3 kann, wie es in der Regel der Fall ist, näherungsweise rund sein, wobei der Dorn 1 mittig in der Düse 2 positioniert ist. Der Dorn 1 und die Düse 2 haben somit eine identische Mittelinie M. Natürlich können die Düse 2 und oder der Dorn 1 auch jede andere Geometrie, wie zum Beispiel eine quadratische, eine rechteckige, eine ovale Geometrie oder aber auch eine andere punktsymmetrische Geometrie besitzen.

Die Düse 2 ist fest mit einem in Fig. 1 nicht dargestellten Extruder verbunden, während der Dorn 1 sich relativ zu der feststehenden Düse 2 verschieben lässt. Der Dorn 1 und die Düse 2 weisen in einem Austrittsbereich A des Kopfes jeweils mindestens einen Kopfabschnitt auf, der eine innerhalb des Kopfabschnitts gleichbleibende Querschnittsfläche besitzt. Der Dorn 1 weist mindestens zwei Kopfabschnitte B, C, D, oder G auf, die innerhalb des betreffenden Kopfabschnitts B, C, D oder G eine gleichbleibende Geometrie aufweisen, deren Querschnittsfläche sich aber von der Querschnittfläche eines benachbarten Kopfabschnittes C, B, G oder D unterscheidet. Die axiale Länge eines jeden Kopfabschnitts B, C, D oder G sollte mindestens 2 mm betragen, vorzugsweise sogar mehr als 5 mm, damit der Kopfabschnitt B, C, D oder G eine ausreichende Wirkung auf den Fließwiderstand der durch den betreffenden Kopfabschnitt B, C, D oder G vorbeiströmenden Masse besitzt.

Um die Optimierung der Fließkanalgeometrie zu erleichtern, kann es vorteilhaft sein, wenn der Dorn 1 aus einzelnen Scheiben zusammengesetzt ist, so dass bei der Optimierung der Oberflächengeometrie des Dorns 1 eventuell nur eine einzelne Scheibe ausgetauscht werden kann und nicht immer gleich der komplette Dorn 1 ausgewechselt werden muss.

Da bei dem erfindungsgemäßen Extrusionskopf der Dorn 1 in Extremfällen sehr weit und auch sehr schnell verfahren werden muss, sollte die Querschnittsfläche der Öffnung F der Dornführung 4 idealerweise gleich der Querschnittsfläche des Kopfabschnitts C sein, oder sich aber maximal um 15 Prozent davon unterscheiden. Nur so kann vermieden werden, dass sich beim Verfahren das Fließkanalvolumen im Kopf nicht in größerem Maß ändert, was bei einem konstanten Massestrom, der von dem Extruder ausgestoßen wird, automatisch zu einer störenden Änderung der Austrittsgeschwindigkeit v des Schlauchs 11 führen würde. Das gilt in gleicher Weise natürlich auch für die Düse bei den Köpfen, bei denen nicht der Dorn sondern die Düse verfahren wird. Im Folgenden wird aus Gründen der Vereinfachung nur noch der Fall des beweglichen Dorns 1 beschrieben. Alle aufgeführten Argumente gelten sinngemäß natürlich auch für den Fall, dass die Düse 2 und nicht der Dorn 1 verfahren wird.

Bei Speicherköpfen ist es notwendig, dass der Austrittsspalt s des Fließkanals 3 am Austrittsbereich des Extrusionskopfs geschlossen ist, wenn der Speicher mit Schmelze gefüllt wird. Deswegen benötigt der axial verschiebbare Dorn 1 am Ende einen kurzen konischen Dornbereich 8. Zum Schließen wird der Dorn 1 so weit hochgefahren, bis das Ende dieses konischen Dornbereichs 8 die Düse 2 berührt. Zum Ausstoßen der Schmelze wird, wie in Fig. 1 dargestellt, der Dorn 1 um ein Stück heruntergefahren, so dass sich am Dornende 8 ein Austrittsspalt s des Fließkanals 3 ergibt, der durch die Position des Dorns 1 genau vorgegeben ist. Dieser Austrittsspalt s kann nun über dem Umfang in starkem Maß variieren, je nachdem, ob in dem Dornbereich, der sich gerade am Düsenende befindet, lokale Profilierungen 6 vorhanden sind, oder ob die Mittellinie Mg des Kopfabschnitts G nicht mit der Mittellinie des Extrusionskopfes übereinstimmt.

Der für das Verfahren erforderliche Verfahrweg 9 des Dorns 1, der den Austrittsbereich A definiert, ist im Allgemeinen deutlich größer als bei konventionellen Blasverfahren. Er sollte bei kleinen Extrusionsköpfen im Minimum größer als 1 mm sein und bei großen Extrusionsköpfen im Maximum bis 100 mm oder mehr betragen können, um damit möglichst viele unterschiedliche Fließkanalbereiche bzw. Kopfabschnitte B, C, D oder G wirksam oder unwirksam werden zu lassen. Um sicherzustellen, dass die Schmelze auch bei Ausnutzung des maximalen Verfahrwegs 9, das heißt auch noch bei einem sehr weit herausgefahrenen Dorn 1 über das konische Dornende 8 gleitet, kann es vorteilhaft sein, das konische Dornende 8 aus Teflon herzustellen, oder aber zumindest die Oberfläche des konischen Dornabschnitts 8 mit einer Schicht zu versehen, die das Gleiten fördert.

Bei Anlagen, die keinen Speicherkopf besitzen, und die deshalb den Schlauch 11 kontinuierlich ausstoßen, ist das kurze konische Dornende 8 natürlich nicht erforderlich, da der Austrittsspalt s des Fließkanals 3 zu keinem Zeitpunkt geschlossen werden muss. Um nun die Wanddicke des Schlauchs 11 entsprechend den jeweiligen lokalen Verstreckgraden, die das Formteil besitzt, über der Länge und über dem Umfang gezielt verändern zu können, verfügt der Dorn 1 über mindestens zwei Kopfabschnitte B und C mit einer jeweils innerhalb des Kopfabschnitts B, bzw. C gleichbleibenden Querschnittsfläche, wobei die Querschnittsflächen der Kopfabschnitte B und C voneinander abweichen. Auf diese Weise kann man es erreichen, dass die Austrittsgeschwindigkeit v des Schlauchs 11 über dem Umfang gleich ist, obwohl der durch den jeweiligen Kopfabschnitt B oder C gebildete Austrittsspalt s des Fließkanals 3 am Ende einer Düse 1 über dem Umfang unterschiedlich groß ist.

Idealerweise besitzen die beiden Kopfteile im Austrittsbereich A mindestens je einen Oberflächenbereich bzw. Kopfabschnitt C und E, die näherungsweise zylindrisch sind.

Um an jeder Stelle über dem Umfang des Extrusionskopfes immer die gleiche Masseaustrittsgeschwindigkeit v zu erreichen, kann es notwendig sein, dass der Dorn 1 mindestens einen Kopfabschnitt B besitzt, dessen mittlerer Abstand von der Mittellinie M des Kopfes größer ist und mindestens einen Kopfabschnitt G besitzt, dessen mittlerer Abstand von der Mittellinie M kleiner ist als der eines dritten Kopfabschnitts C. In vielen Fällen ist es auch vorteilhaft, wenn das bewegliche Kopfteil im Austrittsbereich A wenigstens zwei Kopfabschnitte B und G aufweist, deren Mittellinien Mg oder M eine andere Lage besitzen. Der Abstand der Mittellinien sollte bei kleinen Extrusionsköpfen mindestens 0,1 mm betragen, bei großen Extrusionsköpfen kann er größer als 10 mm sein. Der Dorn 1 kann auch sehr kleine lokal begrenzte Profilierungen 6 enthalten. Damit kann dann die Wanddicke des Schlauchs 11 auf einem über dem Umfang sehr kleinen Bereich verändert werden, um sehr lokal begrenzten Unterschieden in den Verstreckgraden im Hohlkörper gerecht zu werden. Bei komplizierten Geometrien des aus einem extrudierten Schlauchabschnitt hergestellten Hohlkörpers kann es notwendig werden, dass ein Dornabschnitt B, C, D, G über mindestens 30 Prozent seines Umfangs eine von der kreisförmigen Grundgeometrie abweichende, unregelmäßige, Geometrie besitzt.

Zur Reduzierung von Unterschieden in der Austrittsgeschwindigkeit des Schlauchs 11 über dem Umfang kann es weiterhin sehr vorteilhaft sein, wenn der Dorn 1 mindestens einen exzentrischen Fließkanalabschnitt G besitzt, der sich außerhalb des Austrittsbereichs A des Extrusionskopfes befindet, und der erst durch eine Verschiebung des Dorns 1 in den Austrittsbereich A gelangt. Die Geometrie dieses Fließkanalabschnitts G muss dann wiederum so mit der Geometrie des Dornbereichs, der sich bei der entsprechenden Dornposition noch im Austrittsbereich A befindet, abgestimmt werden, dass sich trotz eines stark variierenden Austrittsspalts s des Fließkanals 3 wiederum gleiche Fließgeschwindigkeiten v über dem Umfang ergeben.

Die Möglichkeiten zur gezielten Wanddickenprofilierung des Schlauchs 11 werden enorm erweitert, wenn die Düse 2 in axialer Richtung zweigeteilt ist und zwei Düsenteile 2A und 2B aufweist, und wenn sich zwischen den beiden Teilen 2A, 2B der Düse 2 ein elastisches Kippgelenk 5 befindet, das einerseits gegenüber der fließfähigen Masse abdichtet, das aber gleichzeitig zulässt, dass die beiden Teile 2A und 2B der Düse 2 geringfügig relativ zueinander verkippt werden können. In Verbindung mit einem Antrieb 10, mit dem die beiden Düsenteile 2A und 2B zueinander verkippt werden können, wird ein vorteilhaftes Blasformverfahren möglich, bei dem der Austrittsspalt s eines Fließkanals 3 eines Extrusionskopfes mit einem vorteilhaften parallelen oder nahezu parallelen Austrittsbereich A durch Kippen eines Düsenteils 2A, 2B und oder durch eine lokale Deformation der Düse 2 während des Austrags des Schlauchs 11 mit Hilfe von geeigneten Stellgliedern 10 verändert wird. Damit können dann Wanddickenprofilierungen in Austritts- und in Umfangsrichtung des Schlauchs 11 erreicht werden, die mit keinem bekannten Verfahren erreichbar sind. Somit kann die Wanddickenverteilung von Hohlkörpern, die extreme Unterschiede in den lokalen Verstreckverhältnissen besitzen, erheblich verbessert werden.

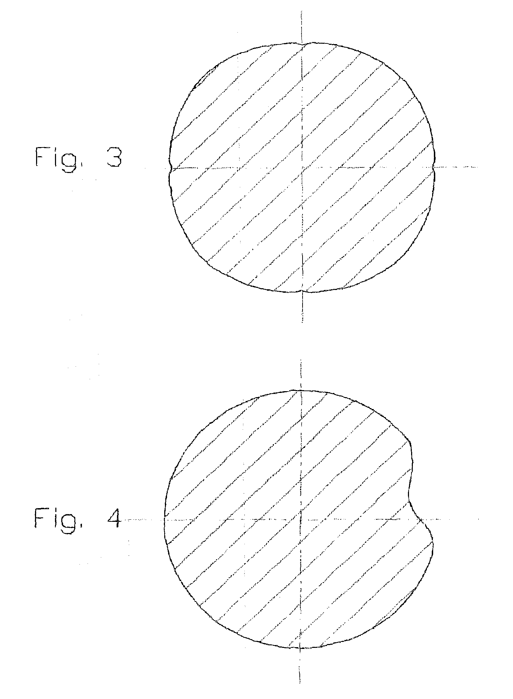

Fig. 3 zeigt nun beispielhaft eine Querschnittsfläche eines Kopfabschnitts eines Kopfteils, der geeignet ist zum Austrag eines Schlauchabschnitts, aus dem ein quadratischer Bereich eines Formkörpers hergestellt werden kann. Die Querschnittsflächen von Bereichen bzw. Kopfabschnitten, die sich oberhalb dieses Bereichs befinden, sollten nun eine solche Geometrie aufweisen, dass sich bei dem vorgegebenen Massedurchsatz zwar eine unterschiedliche Wanddicke ergibt, dass aber die Geschwindigkeit v des Schlauchaustrags über dem Umfang des Schlauchs möglichst konstant ist.

Fig. 4 zeigt beispielsweise eine Querschnittsfläche eines Kopfabschnitts für einen runden Formkörperabschnitt, der an einer Stelle einen Ausguss oder einen Einfüllstutzen besitzt, in dessen Bereich der Verstreckgrad deutlich größer ist, als über dem restlichen Umfang des Formkörpers. Auch in diesem Fall muss natürlich der restliche Austrittsbereich A des Extrusionskopfes so gestaltet sein, dass die Austrittsgeschwindigkeit v des Schlauchs 11 über seinem Umfang möglichst konstant ist. Fährt man dann beispielsweise durch Verschieben einen ersten Kopfabschnitt des Dorns 1 aus dem Austrittsbereich A des Extruionskopfes heraus, verliert dieser Kopfabschnitt seinen Einfluss auf die Wanddickenverteilung des Schlauchs 11. Dafür kommt von oben ein neuer Kopfabschnitt in den Bereich des Austrittsspalts s des Extrusionskopfes, der dann die Verteilung der Schmelze stärker beeinflusst, als zu dem vorherigen Zeitpunkt, als er sich noch im Bereich H des Kopfes befunden hat, in dem der Fließkanal 3 viel größer ist als im Austrittsbereich A und insbesondere im Bereich des Austrittsspalts s.

## Patentansprüche

1. Extrusionskopf für Kunststoffextruder, insbesondere zur Herstellung von Vorformlingen für geblasene Behälter, aufweisend zwei Kopfteile, wobei ein erstes Kopfteil ein Dorn (1) und ein zweites Kopfteil eine Düse (2) ist, und wobei die beiden Kopfteile in axialer Richtung über einen Austrittsbereich (A) hinweg relativ zueinander verlagerbar sind, wodurch die Geometrie eines Austrittsspalts s eines Fließkanals (3), der sich zwischen dem Dorn (1) und der Düse (2) befindet, und damit auch die Wanddicke eines aus dem Extrusionskopf austretenden schlauchförmigen Kunststoffstrangs (11) veränderbar ist, wobei jedes Kopfteil im Austrittsbereich (A) des Extrusionskopfes mindestens einen Kopfabschnitt mit einer gleichbleibenden Querschnittsfläche aufweist und dass mindestens ein Kopfteil mindestens zwei Kopfabschnitte (B) und (C) aufweist, die jeweils eine innerhalb des Kopfabschnitts (B), (C) gleichbleibende Querschnittsfläche besitzen, die axial voneinander beabstandet sind und die eine voneinander abweichende Querschnittsfläche aufweisen, **dadurch gekennzeichnet, dass** sich die Querschnittsfläche der Öffnung (F) der Führung eines beweglichen Kopfteils von der Querschnittsfläche des Endbereichs des beweglichen Kopfteils um weniger als 10% unterscheiden, so dass bei einem Verschieben des beweglichen Kopfteils keine Unstetigkeit in der mittleren Austrittsgeschwindigkeit des aus dem Extrusionskopf austretenden schlauchförmigen Kunststoffstrangs (11) auftritt.

2. Extrusionskopf nach Anspruch 1, **dadurch gekennzeichnet, dass** mindestens bei einem Kopfteil die Querschnittsflächen am Anfang und am Ende des Austrittsbereichs (A) annähernd gleich sind.

3. Extrusionskopf nach einem der vorgenannten Ansprüche, **dadurch gekennzeichnet dass** der Extrusionskopf im Austrittsbereich (A) mindestens einen Kopfabschnitt (B) besitzt, dessen mittlerer Abstand der Oberfläche von der Mittellinie (M) des Extrusionskopfes größer und mindestens einen Kopfabschnitt (G) besitzt, dessen mittlerer Abstand von der Mittellinie (M) kleiner ist als der eines dritten Kopfabschnitts (C).

4. Extrusionskopf nach einem der vorgenannten Ansprüche, **dadurch gekennzeichnet, dass** der bewegliche Kopfteil im Austrittsbereich (A) wenigstens zwei Abschnitte (B) und (G) aufweist, deren Mittellinie (Mg) oder (M) eine unterschiedliche Lage besitzen.

5. Extrusionskopf nach einem der vorgenannten Ansprüche, **dadurch gekennzeichnet, dass** der bewegliche Kopfteil (2) oder (3) mindestens einen Kopfabschnitt (G) besitzt, dessen Mittellinie (Mg) wenigstens einen Abstand von 0,1 mm von der Mittellinie (M) des Kopfteils (2) oder (3) besitzt.

6. Extrusionskopf nach einem der vorgenannten Ansprüche, **dadurch gekennzeichnet, dass** das bewegliche Kopfteil im Austrittsbereich (A) über wenigstens einen Kopfabschnitt (G) verfügt, in dem mindestens ein Bereich (6) existiert, der eine von der kreisförmigen Geometrie abweichende, punktsymmetrische, Geometrie besitzt.

7. Extrusionskopf nach einem der vorgenannten Ansprüche, **dadurch gekennzeichnet, dass** der bewegliche Kopfteil mindestens einen Kopfabschnitt (D) besitzt, dessen Mittellinie (Md) nicht die gleiche Lage besitzt, wie die Mittellinie (M) des Extrusionskopfes und der erst durch eine Verschiebung des beweglichen Kopfteils in den Austrittsbereich (A) des Extrusionskopfes gelangt.

8. Extrusionskopf nach einem der vorgenannten Ansprüche, **dadurch gekennzeichnet, dass** das Ende des bewegliche Kopfteils aus Teflon besteht.

9. Extrusionskopf nach einem der vorgenannten Ansprüche, **dadurch gekennzeichnet, dass** die Düse (2) zweigeteilt ist, und dass sich zwischen den beiden Düsenteilen (2A) und (2B) ein elastisches Kippgelenk (5) befindet, mit dem ein Düsenteil (2A), (2B) relativ zum anderen Düsenteil (2B), (2A) gekippt werden kann.

10. Extrusionskopf nach einem der vorgenannten Ansprüche, **dadurch gekennzeichnet, dass** der Extrusionskopf zum Anflanschen der Düse (2) einen Bajonettverschluss besitzt.

11. Extrusionskopf nach einem der vorgenannten Ansprüche, **dadurch gekennzeichnet, dass** der Austrittsspalt (s) am Ende des Austrittsbereich (A) des Fließkanals (3) eine ovale, eine rechteckige oder eine andere punktsymmetrische Querschnittsgeometrie besitzt.

## Claims

1. An extruder head for plastic extruders, in particular for producing parisons for blow-molded containers, comprising two head parts, wherein a first head part is a mandrel (1) and a second head part is a nozzle (2), and wherein the two head parts are displaceable relative to one another over a discharge region (A) in the axial direction, so that a geometry of a discharge gap s of a flow channel (3), which is situated between the mandrel (1) and the nozzle (2), and thus also the wall thickness of a plastic tubular strand (11) being discharged from the extruder head, are variable, wherein each head part in the discharge region (A) of the extruder head has at least one head section with a uniform cross-sectional area, and at least one head part has at least two head sections (B) and (C), each having a cross-sectional area that remains uniform within the head section (B), (C), which are spaced a distance from one another axially and have a different cross-sectional area from one another, **characterized in that** the cross-sectional area of the opening (F) of the guide of a movable head part differs by less than 10% from the cross-sectional area of the end region of the movable head part so that there will be no discontinuity in the average discharge velocity of the plastic tubular strand (11) being discharged from the extruder head when displacing the moveable head part.

2. Extruder head according to claim 1, **characterized in that** at least in the case of one head part, the cross-sectional areas at the beginning and at the end of the discharge region (A) are approximately the same.

3. Extruder head according to one of the preceding claims, **characterized in that** the extruder head has at least one head section (B) in the discharge region (A) whose average distance of the surface from a midline (M) of the extruder head is greater than that of a third head section (C) and having at least one head section (G) whose average distance from the midline (M) is smaller than that of a third head section (C).

4. Extruder head according to one of the preceding claims, **characterized in that** the movable head part has at least two sections (B) and (C) in the discharge region (A), their midlines (Mg) or (M) being in different positions.

5. Extruder head according to one of the preceding claims, **characterized in that** the movable head part (2) or (3) has at least one head section (G), its midline (Mg) being spaced at least 0.1 mm from the midline (M) of the head part (2) or (3).

6. Extruder head according to one of the preceding claims, **characterized in that** the movable head part in the discharge region (A) has at least one head section (G), in which there is at least one region (6), which has a point-symmetrical geometry that deviates from the circular geometry.

7. Extruder head according to one of the preceding claims, **characterized in that** the movable head part has at least one head section (D) whose midline (Md) is not in the same position as the midline (M) of the extruder head and which enters the discharge region (A) of the extruder head only by a displacement of the moveable head part.

8. Extruder head according to one of the preceding claims, **characterized in that** the end of the movable head part is made of Teflon.

9. Extruder head according to one of the preceding claims, **characterized in that** the nozzle (2) is divided into two parts, and that there is an elastic tilt joint (5) between the two nozzle parts (2A) and (2B), with which a nozzle part (2A), (2B) can be tilted relative to the other nozzle part (2B), (2A).

10. Extruder head according to one of the preceding claims, **characterized in that** the extruder head has a bayonet closure for flange connection of the nozzle (2).

11. Extruder head according to one of the preceding claims, **characterized in that** the discharge gap (s) has an oval or rectangular cross-sectional geometry or some other point-symmetrical geometry at the end of the discharge region (A) of the flow channel (3).

## Revendications

1. Tête d'extrudeuse pour une extrudeuse à plastique, notamment en vue de la fabrication de paraisons pour des récipients soufflés, présentant deux éléments de tête, un premier élément de tête étant un mandrin (1) et un second élément de tête étant une filière (2) et les deux éléments de tête étant déplaçables en direction axiale au-delà d'une zone de sortie (A) l'un par rapport à l'autre, la géométrie d'une fente de sortie s d'un canal d'écoulement (3), qui se trouve entre le mandrin (1) et la filière (2) et par conséquent aussi l'épaisseur de paroi d'un cordon en plastique tubulaire (11) sortant de la tête d'extrudeuse étant modifiable, chaque élément de tête possédant dans la zone de sortie (A) de la tête d'extrudeuse au moins une section de tête avec une surface de section transversale constante et en ce qu'au moins un élément de tête présente au moins deux sections de tête (B) et (C), qui possèdent respectivement une surface de section transversale constante à l'intérieur des sections de tête (B), (C), qui sont espacées axialement l'une de l'autre et présentent une surface de section transversale divergente l'une de l'autre, **caractérisée en ce que** la surface de section transversale de l'orifice (F) de la glissière d'un élément de tête mobile se distingue de moins de 10 % de la surface de section transversale divergente de la zone d'extrémité de l'élément de tête mobile, de sorte que dans le cas d'un décalage de l'élément de tête mobile aucune discontinuité ne se produise dans la vitesse de sortie moyenne du cordon en plastique tubulaire (11) sortant de la tête d'extrudeuse.

2. Tête d'extrudeuse selon la revendication 1, **caractérisée en ce que** dans le cas d'au moins un élément de tête, les surfaces des sections transversales sont pratiquement identiques au début et à la fin de la zone de sortie (A).

3. Tête d'extrudeuse selon une quelconque des revendications précédentes, **caractérisée en ce que** la tête d'extrudeuse possède dans la zone de sortie (A) au moins une section de tête (B), dont l'écart central de la surface partant de la ligne médiane (M) de la tête d'extrudeuse est plus grand et possède au moins une section de tête (G), dont l'écart central partant de la ligne médiane (M) est plus petit que celui d'une troisième section de tête (C).

4. Tête d'extrudeuse selon une quelconque des revendications précédentes, **caractérisée en ce que** l'élément de tête mobile présente au moins deux sections (B) et (G) dans la zone de sortie (A), dont les lignes médianes (Mg) ou (M) possèdent une situation différente.

5. Tête d'extrudeuse selon une quelconque des revendications précédentes, **caractérisée en ce que** l'élément de tête mobile (2) ou (3) possède au moins une section de tête (G), dont la ligne médiane (Mg) possède du moins un écart de 0,1 mm à partir de la ligne médiane (M) des éléments de tête (2) ou (3).

6. Tête d'extrudeuse selon une quelconque des revendications précédentes, **caractérisée en ce que** l'élément de tête mobile dispose dans la zone de sortie (A) du moins d'une section de tête (G) dans laquelle au moins une zone (6) existe, qui possède une géométrie à symétrie ponctuelle divergeant de la géométrie circulaire.

7. Tête d'extrudeuse selon une quelconque des revendications précédentes, **caractérisée en ce que** l'élément de tête mobile possède au moins une section de tête (D), dont la ligne médiane (Md) ne possède pas la même position que la ligne médiane (M) de la tête d'extrudeuse, et qui parvient seulement par un décalage de l'élément de tête mobile dans la zone de sortie (A) de la tête d'extrudeuse.

8. Tête d'extrudeuse selon une quelconque des revendications précédentes, **caractérisée en ce que** l'extrémité de l'élément de tête mobile est constituée de téflon.

9. Tête d'extrudeuse selon une quelconque des revendications précédentes, **caractérisée en ce que** la filière (2) est divisée en deux et **en ce qu'**entre les deux éléments de filière (2A) et (2B) se trouve une articulation basculante élastique (5) avec laquelle un élément de filière (2A), (2B) peut être basculé par rapport à l'autre élément de filière (2B), (2A).

10. Tête d'extrudeuse selon une quelconque des revendications précédentes, **caractérisée en ce que** la tête d'extrudeuse possède un joint à baïonnette pour le bridage de la filière (2).

11. Tête d'extrudeuse selon une quelconque des revendications précédentes, **caractérisée en ce que** la fente de sortie (s) à l'extrémité de la zone de sortie (A) du canal d'écoulement (3) possède une géométrie de section transversale ovale, rectangulaire ou une autre à symétrie ponctuelle.
